# EUROPEAN PATENT SPECIFICATION

(11) **EP 3 387 877 B1**
(45) Date of publication and mention of the grant of the patent: **02.11.2022**
(21) Application number: 16801426.4
(22) Date of filing: 21.11.2016
(51) Int. Cl.: H04W 76/28, H04W 16/14

(54) **COMMUNICATING SIGNALING CONTROL INFORMATION DURING DRX ON UNLICENSED SPECTRUM**
KOMMUNIKATION VON SIGNALISIERUNGSKONTROLLINFORMATIONEN WÄHREND DES DRX AUF UNLICENSED SPECTRUM
COMMUNICATION D'INFORMATIONS DE CONTRÔLE DE SIGNALISATION DURANT DRX SUR SPECTRUM NON LICENCIÉ

(30) Priority: 10.12.2015 WO PCT/EP2015/079262
(43) Date of publication of application: 17.10.2018
(73) Proprietor: Nokia Solutions and Networks Oy, 02610 Espoo (FI)
(72) Inventor: LUNDEN, Jari Petteri, 02230 Espoo (FI); VIRTEJ, Elena, 02100 Espoo (FI); DALSGAARD, Lars, 90230 Oulu (FI)
(74) Representative: Nokia EPO representatives
(86) International application number: PCT/EP2016/078289
(87) International publication number: WO 2017/097567

(56) References cited:
- EP-A1- 1 993 303
- EP-A1- 2 592 893
- WO-A1-2015/127669
- WO-A1-2015/169406
- CN-A- 104 581 908
- "3rd Generation Partnership Project; Technical Specification Group Radio Access Network; Evolved Universal Terrestrial Radio Access (E-UTRA); Medium Access Control (MAC) protocol specification (Release 12)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.7.0, 24 September 2015 (2015-09-24), pages 1-77, XP050996302, [retrieved on 2015-09-24]
- MOTOROLA MOBILITY: "Options for Reducing Active Time with LAA", 3GPP DRAFT; R2-153746, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 23 August 2015 (2015-08-23), XP051004395, Retrieved from the Internet: URL:http://www.3gpp.org/ftp/Meetings_3GPP_ SYNC/RAN2/Docs/ [retrieved on 2015-08-23]

## Description

This disclosure relates to signalling of control information and more particularly to signalling of control information in a wireless communication system where communications can take place in unlicensed radio spectrum.

A communication system can be seen as a facility that enables communication between two or more devices such as user terminals, machine-like terminals, base stations and/or other nodes by providing communication channels for carrying information between the communicating devices. A communication system can be provided for example by means of a communication network and one or more compatible communication devices. The communication may comprise, for example, communication of data for carrying communications such as voice, electronic mail (email), text message, multimedia and/or content data and so on. Non-limiting examples of services provided include two-way or multi-way calls, data communication or multimedia services and access to a data network system, such as the Internet.

In a wireless system at least a part of communications between at least two stations occurs over wireless interfaces. Examples of wireless systems include public land mobile networks (PLMN), satellite based communication systems and different wireless local networks, for example wireless local area networks (WLAN). A local area wireless networking technology allowing devices to connect to a data network is known by the tradename WiFi (or Wi-Fi). WiFi is often used synonymously with WLAN.

The wireless systems can be divided into cells, and are therefore often referred to as cellular systems. A base station provides at least one cell. A user can access a communication system by means of an appropriate communication device or terminal capable of communicating with the base station. A communication device of a user is often referred to as user equipment (UE). A communication device is provided with an appropriate signal receiving and transmitting apparatus for enabling communications, for example enabling communications with the base station and/or communications directly with other user devices. The communication device can communicate on appropriate channels, e.g. listen to a channel on which a station, for example a base station of a cell, transmits. An important part of the transmission by the station comprise control information, for example reference signals, discovery signals and/or resource allocation information.

A communication system and associated devices typically operate in accordance with a given standard or specification which sets out what the various entities associated with the system are permitted to do and how that should be achieved. Communication protocols and/or parameters which shall be used for the connection are also typically defined. Non-limiting examples of standardised radio access technologies include GSM (Global System for Mobile), EDGE (Enhanced Data for GSM Evolution) Radio Access Networks (GERAN), Universal Terrestrial Radio Access Networks (UTRAN) and evolved UTRAN (E-UTRAN). An example communication system architectures is the long-term evolution (LTE) of the Universal Mobile Telecommunications System (UMTS) radio-access technology. The LTE is standardized by the 3rd Generation Partnership Project (3GPP). The LTE employs the Evolved Universal Terrestrial Radio Access Network (E-UTRAN) access. Further development of LTE are sometimes referred to as LTE Advanced (LTE-A). In LTE speak base stations are referred to as eNBs (evolved Node Bs or E-UTRAN Node Bs).

Standalone LTE type operation on unlicensed spectrum might be desired in certain circumstances. Stand-alone LTE-U (LTE unlicensed) can be understood to refer to a LTE based system operating on unlicensed carrier without a supporting connection on a licensed carrier. Thus LTE standalone operation on unlicensed spectrum would mean that eNB/UE air interface rely solely on unlicensed spectrum without any need for a carrier on licensed spectrum. Basically the principle can be applied to deployment of LTE or similar licensed system in unlicensed frequency domain where access (by eNB, UE or other device) is not guaranteed in a similar robust way as would be expected in the licensed domain.

Discontinuous reception (DRX) is a mechanism for enabling UE energy saving by limiting the time when two devices, e.g. a base station and a mobile device, can communicate. In a typical scenario a UE is configured to monitor control information during certain period in predefined intervals. The base station then transmits to the UE only on such times which the receiving device knows to listen to or is required to listen. In other times the receiving device does not expect to receive anything, and the device is not requested to receive anything, and can switch its receiving function off in order to save power.

DRX is a network configurable feature enabling UE power savings when the UE is in connected mode but not in active transmission so that the UE is not requested to receive all the time but instead the receiver thereof can be turned off according to certain rules. For LTE the current DRX monitoring rules are described in 3GPP TS 36.321 version V12.7.0. The active time indicates when the UE is available for scheduling are synchronized between the UE and the network. The DRX mechanism for LTE was developed for licensed carrier environment where the operator has full control of the band, and thus the network has complete control when to schedule a UE as the channel access on the network side is always guaranteed and fully network controlled. However, use of unlicensed band would mean that channel access can no longer be guaranteed.

Thus a system operating in accordance with the current LTE specifications would not work properly if deployed according to the stand-alone principles of the LTE-U. A specific problem recognised by the inventors is due to use of so called listen before talk (LBT) protocol on the eNB side. A listen before talk (LBT) type protocol can be used for opportunistic allocation of resources. Listen before talk is a contention-based protocol used in wireless communication by allowing several devices to share the same spectrum or channel. If a device wants to transmit information, the device will have to first check that the channel is not already in use. Because of the LBT there is no guarantee that the eNB can always gain access to the channel when needed - at any given time. Current LTE DRX is defined in such a way that the UE shall monitor the downlink (DL) for possible allocations (e.g. on the physical downlink control channel (PDCCH)) from the network. UE shall as minimum monitor for a minimum time period (On-Duration). If scheduled as a result of this the UE shall continue to monitor DL for a period defined by inactivity timer from each such scheduling occasion. The operation is based on the basic assumption that the eNB can access and have access to the channel whenever needed because the use of the channel is under eNB control.

However, this basic assumption is not available when operating in unlicensed bands where eNB does not have such a guarantee. Thus the eNBs sometimes have to apply Clear Channel Assessment (CCA) and/or listen before talk (LBT) prior to accessing a channel. This can cause delay in signalling control information and even missed signalling instances. This can become especially problematic in, for example, standalone systems where the network cannot rely on being able to reach the UE on a licensed carrier to wake it up from DRX. Similar issues can also be faced also other systems such as a licensed assisted access (LAA) system.

In CCA/LBT the eNB senses the channel in order to conclude whether the channel is in use by another user or is free to be accessed. If the eNB concludes that the channel is in use it has to wait before accessing the channel, meaning that channel access is not guaranteed in the same robust way in unlicensed spectrum as in licensed spectrum. Further, in licensed band the UE is required to monitor given on-duration periods. If scheduled the UE stays awake for a given period in order to be available for further scheduling, after which it may, if no further scheduling is received, it may go to DRX (sleep) and wait until the next on-duration to monitor downlink control channel for scheduling. The on-duration is of certain periodicity and relies on robust network control of DL. In unlicensed band operation however the DL access is not guaranteed, and thus, even though the eNB would like to schedule the UE this may not possible due to the LBT and therefore the UE may end up going to DRX sleep, and is no longer available for scheduling. This means that scheduling will be delayed until next on-duration.

It is noted that the above discussed issues are not limited to any particular communication environment, but may occur in any appropriate communication system where reference signals may be delayed or blocked.

3GPP document R2-153746 ("Options for Reducing Active Time with LAA") discusses the extension of an active time by a UE based on activity on an unlicensed carrier and by an eNB based on activity on an unlicensed carrier, respectively.

Further documents of the prior art are EP 1 993 303 A1, EP 2 592 893 A1, CN 104 581 908 A, WO 2015/169406 A1, WO 2015/127669 A1 and 3GPP technical specification TS 36.321, V12.7.0, 24 September 2015, pages 1-77.

Embodiments of the invention aim to address one or several of the above issues.

In accordance with an embodiment there is provided a method for communicating control information in unlicensed radio spectrum based on a discontinuous reception pattern as according to claim 1.

According to another aspect there is provided a communication device as according to claim 9.

communication system comprising a communication device and a base station as according to claim 17 is also provided.

A computer program comprising program code means adapted to perform the herein described methods as according to claim 18 is also provided.

Various other aspects and further embodiments are also described in the following detailed description of examples embodying the invention and in the attached claims.

The invention will now be described in further detail, by way of example only, with reference to the following examples and accompanying drawings, in which:
Figure 1 shows a schematic example of a system where the invention may be implemented;
Figure 2 shows an example of a communication device;
Figure 3 shows an example of control apparatus;
Figure 4 illustrates the principle of DRX;
Figures 5A, B and C are flowcharts in accordance with certain embodiments; and
Figures 6 and 7 show examples of use of flexible DRX.

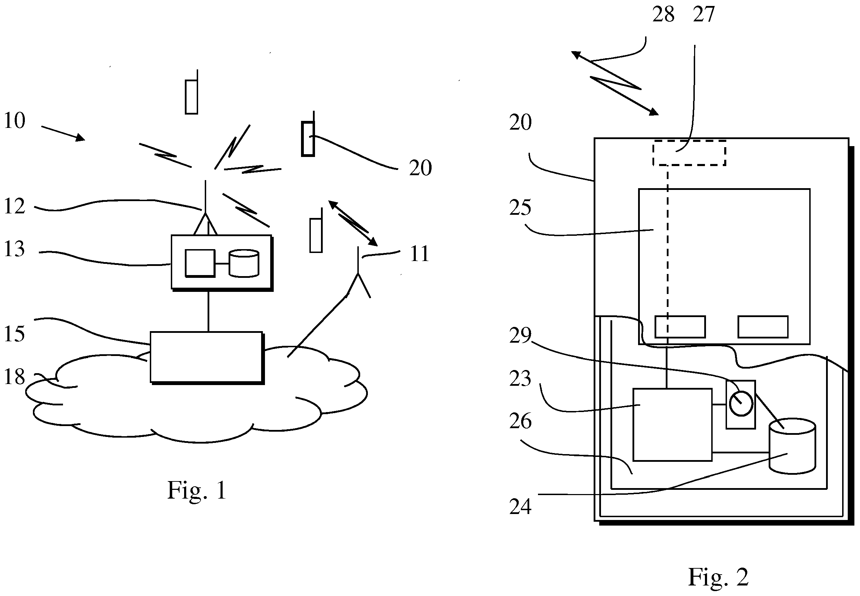

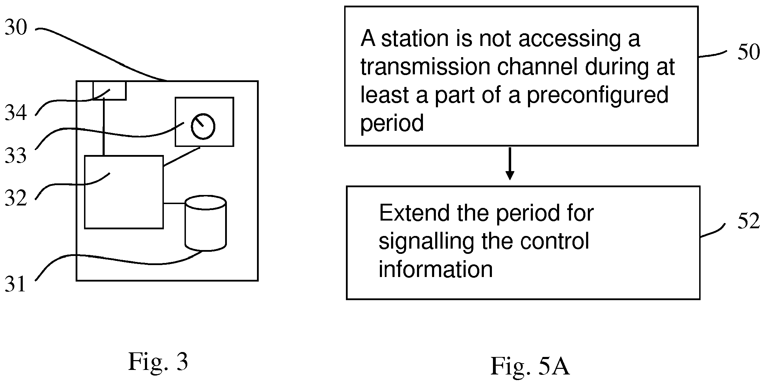

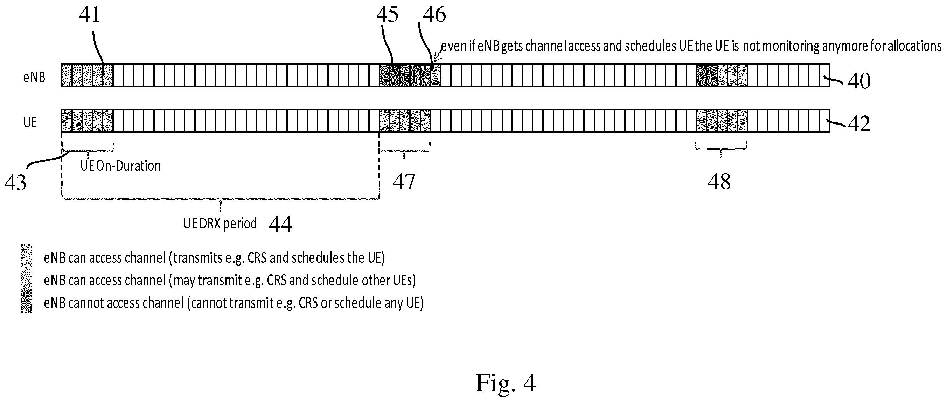

In the following certain exemplifying embodiments are explained with reference to a wireless communication system serving devices adapted for wireless communication. Before explaining in detail the exemplifying embodiments, certain general principles of a wireless system, components thereof, and devices for wireless communication are briefly explained with reference to system 10 of Figure 1, device 20 of Figure 2 and control apparatus thereof, control apparatus of a stand-alone station of Figure 3, and the basic principle of preconfigured discontinuous reception (DRX) operation of Figure 4 to assist in understanding the described examples.

A communication device 20 can be used for accessing various services and/or applications provided via a communication system 10. In wireless communication systems the access is provided via a wireless access interface between wireless communication devices and an appropriate access system. The device 20 may access wirelessly a communication system via a base station. A base station site can provide one or more cells of a cellular system. In the Figure 1 example, a base station 12 can provide one or more cells. In addition to the base station 12, at least one other cell can also be provided by means of another station or stations, for example a remote radio head of the base station 12. A station that is not co-located at base station 12 may be provided. This possibility is denoted by station 11 in Figure 1. Each mobile device 20 and base station may have one or more radio channels open at the same time and may receive signals from more than one source. Thus more than one node or device may want to use a resource such as a channel at the same time.

A base station can be connected to a data network 18 via an appropriate gateway 15. A gateway function between the access system and another network such as a packet data network may be provided by means of any appropriate gateway node, for example a packet data gateway and/or an access gateway. A communication system may thus be provided by one or more interconnect networks and the elements thereof, and one or more gateway nodes may be provided for interconnecting various networks.

A communication device can access a communication system based on various access techniques, for example those based on the third Generation Partnership Project (3GPP) specifications. A non-limiting example of mobile architectures is known as the Evolved Universal Terrestrial Radio Access Network (E-UTRAN). A non-limiting example of base station of a cellular system is what is termed as a NodeB or E-UTRAN NodeB (eNB) in the vocabulary of the 3GPP specifications. The eNBs may provide E-UTRAN features such as user plane Radio Link Control/Medium Access Control/Physical Layer Protocol (RLC/MAC/PHY) and control plane Radio Resource Control (RRC) protocol terminations towards mobile communication devices.

At least some of the stations may be arranged to operate on the unlicensed radio spectrum, as discussed above. For example, stations 11 and 12 may each provide access for the communications devices. At least one of the one of stations 11 and 12 may provide LTE or LTE alike access in unlicensed radio spectrum. At least one of the stations may have been configured to provide standalone operation on unlicensed radio spectrum without a supporting connection on a licensed carrier.

Figure 2 shows a schematic, partially sectioned view of a communication device 20 that a user can use for communications. Such a communication device is often referred to as user equipment (UE) or terminal. An appropriate communication device may be provided by any device capable of sending and receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may provide, for example, communication of data for carrying communications such as voice, electronic mail (email), text message, multimedia, positioning data, other data, and so on. Users may thus be offered and provided numerous services via their communication devices. Non-limiting examples of these services include two-way or multi-way calls, data communication or multimedia services or simply an access to a data communications network system, such as the Internet.

A mobile device is typically provided with at least one data processing entity 23, at least one memory 24 and other possible components 29 for use in software and hardware aided execution of tasks it is designed to perform, including control of access to and communications with base stations and/or other user terminals. The tasks can include various measurements and radio link estimations and/or reporting based on measurement samples and control of DRX related operations. The data processing, storage and other relevant control apparatus can be provided on an appropriate circuit board and/or in chipsets. This apparatus is denoted by reference 26. The apparatus 26 can comprise at least one timer function 29. For example, in relation to the herein disclosed DRX procedures, one or more timers can be provided by timer function 29 for controlling expiry of various possible periods, for example on-duration and/or inactivity periods of certain examples described below and so on.

A user may control the operation of the device 20 by means of a suitable user interface such as key pad, voice commands, touch sensitive screen or pad, combinations thereof or the like. A display 25, a speaker and a microphone are also typically provided. Furthermore, a mobile communication device may comprise appropriate connectors (either wired or wireless) to other devices and/or for connecting external accessories, for example hands-free equipment, thereto.

The device 20 may receive and transmit signals 28 via appropriate apparatus for receiving and transmitting signals. In Figure 2 transceiver apparatus is designated schematically by block 27. The transceiver may be provided for example by means of a radio part and associated antenna arrangement. The antenna arrangement may be arranged internally or externally to the mobile device. A wireless communication device can be provided with a Multiple Input / Multiple Output (MIMO) antenna system.

Figure 3 shows an example of a control apparatus 30 for a station, for example to be coupled to and/or for controlling one of the station 11 or 12 of Figure 1. The control apparatus 30, as such not covered by the claimed invention, can be arranged to provide control on configurations, information processing and/or communication operations. A control apparatus can be configured to provide control functions in association with generation, communications, and interpretation of control information. The control apparatus 30 comprises at least one memory 31, at least one data processing unit 32, 33 and an input/output interface 34. Element 33 is shown to be provided with at least one timer for the purposes of controlling DRX type communications with communication devices. The timer function 33 at the controller 30 and the timer function 29 at the communication device 20 are typically adapted to maintain the same time to ensure a common active time to enable the controller to schedule communications with the communication devices. Via the interface the control apparatus can be coupled to the relevant node. The control apparatus 30 can be configured to execute an appropriate software code to provide the control functions.

Because of CCA/LBT a station such as an eNB has to sense a channel in order to conclude whether the channel is in use by another user, for example another eNB, another access point (AP) or another device, or is free to be accessed. The sensing can be based e.g. on energy detection and possibly one or more threshold. Non-limiting examples of the channel include a radio channel, ARFCN, a carrier etc. or any other appropriate physical medium. If the channel is not in use, e.g. not sensed as being occupied, the eNB may start to use the channel.

The UE may provide the determination at least in part based on following a configured access procedure. The configured access procedure may be based on regulatory requirements for accessing radio spectrum. If the eNB concludes that the channel it was intending to use is already in use it is not allowed to access channel, and has to wait before being able to access the channel. Because of the channel access being non-guaranteed, when deploying the LTE or LTE like access in unlicensed spectrum, similar robust use of spectrum as when deployed in licensed spectrum cannot be provided. Because channel access is not always possible it can become difficult for the network to configure the UE with a proper DRX configuration. The configuration can be used to ensure good power saving opportunities on UE or device side (long DRX cycle, short on-duration) which consequently leads to a high risk that the eNB does not reach the UE while the UE is active due to not being able to get access to the channel when UE is active. Alternatively eNB does not configure UE with DRX or the on-duration (the minimum time the UE should be listening) is configured longer or more frequent to ensure a higher probability for successful LBT to be able to transmit to the UE during its active time. This option however compromises UE power saving opportunity, the purpose of DRX in the first place. Both options have their drawbacks so selecting either configuration is not optimal for all the cases.

Figure 4 illustrates porting of existing LTE DRX to unlicensed band. More particularly, Figure 4 illustrates a problem that can arise when trying to port LTE DRX directly to unlicensed band where CCA/LBT is to be applied by eNB before channel can be accessed. The eNB transmission pattern 40 shows show in the first UE DRX period 44 the eNB can access the channel, and can thus transmit control information in subframes 41 and schedule the UE. The UE pattern 42 shows corresponding UE on-duration 43. However, the following UE DRX period is problematic as the eNB cannot access the channel at 45. If the access is available in block following the on-duration period 47 of the UE, this would be too late because the UE is no longer monitoring, or is no longer required to monitor, allocations as the period 47 has already ended. The third on-duration instance at 48 illustrates a situation where some of the subframes during the UE on-duration are not available for the eNB. Although there is access, the remaining time may be too short for the eNB UE pair to properly signal the control information during the UE on-duration period.

As is evident from Figure 4, the preconfigured on-duration periods do not necessarily work well on unlicensed carrier in all instances.

According to the herein described principles flexibility is provided for the timing of the on-duration periods and/or other related DRX monitoring periods such that the negative effects of unavailability of a channel for communication of control information can be avoided, or at least mitigated. The flowchart of Figure 5A shows a method for communicating control information in unlicensed radio spectrum based on a discontinuous reception pattern where preconfigured periods are provided for communication of control information. In the method, which does not contain all of the steps required by the present invention, it is determined at 50 that a station is not accessing a transmission channel during at least a part of a preconfigured period. The period for signalling the control information is then extended at 52 in response to the determining.

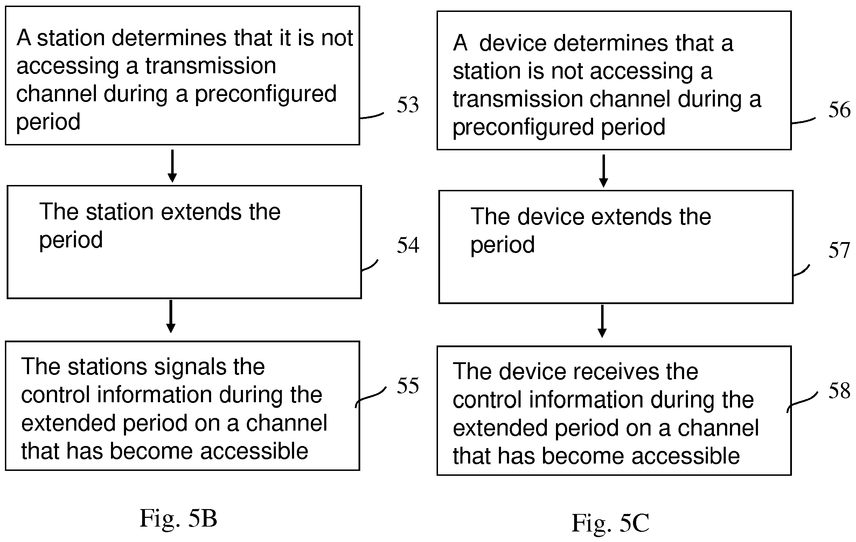

Figure 5B shows a more detailed example of the operation at the station, wherein a method performed by a station is not covered by the claimed invention. After the steps of determining 53 and extending the period 54, the control information can then be signalled at 55 from the station during the extended period on a channel that has become accessible for the station after the determining and which the station can now access.

Figure 5C shows a more detailed example, not containing all of the steps required by the present invention, of the operation at the device receiving the control information. After the steps of determining 56 and extending the period 57, the control information signalling can be received at 58 by the device from the station during the extended period on a channel that has become accessible for the station.

The channel used for the signalling can be the same channel (e.g. entire radio carrier / the physical radio channel etc.) that was determined as not available in the previous try. However, in some applications another appropriate channel may have become available during the extended period, and this channel can be used for signalling of the control information.

The control information may comprise at least one of reference signal, discovery signal and resource allocation information.

The steps of determining, extending and signalling can, in examples not covered by the claimed invention, be performed in a base station attempting to transmit the control information and/or in a device receiving the control information, as according to the claimed invention. The nodes can operate in a substantially synchronised operation and the wireless communication device receiving the control information according to the invention performs the steps.

If the receiving device is not receiving any control information the receiving device may need to determine whether this is so because the station did not transmit anything, and more particularly whether this was so because there was nothing to transmit or if the station was unable to get access to an appropriate channel, e.g. due to LBT.

In the below more detailed examples of discontinuous reception (DRX) rules are used for unlicensed spectrum operation in order to take channel availability issue into account when operating in unlicensed spectrum. The channel / medium availability may depend for example on CCA and/or LBT procedure and/or rules. It is also noted that although the current LTE DRX configuration and timers has been used as the basis, this is only a non-limiting example and shall not be seen as anyhow limiting the general principles. For example, new timers or alternative may be defined for the LTE DRX operation in unlicensed spectrum instead of using the currently defined timers such as the LTE On-Duration timer or the Inactivity Timer.

According to an aspect the DRX on-duration period is not of fixed length but instead depends on whether the station, e.g. eNB, has been able to access the channel. The on-duration period can have a configured minimum length which is used if the eNB is able to access the channel during the on-duration period. If the eNB cannot access the channel, the DRX on-duration period is extended until eNB has successfully accessed the channel. The period is extended both on the eNB and the receiving device side.

Alternatively, or in addition, a fixed lengthening of the on-duration timer may be used or a configured maximum length can be provided. When the maximum length is reached the receiving device, e.g. an UE, may stop monitoring for allocations (e.g. stop monitoring the PDCCH).

The same principle of extending the on-duration timer can also be applied to other DRX related timers. For example, the DRX inactivity timer can be operated accordingly.

The receiving device is according to the invention configured to determine whether the eNB was able to access the channel. This can be based for example on observing transmission of cell specific information by the eNB. For example, reference symbol, e.g. discovery reference signal (DRS) or common reference signal (CRS), transmissions used for supporting measurements can be utilized. An eNB can be configured to attempt to transmit DRS or CRS or other control signalling periodically or a-periodically to assist mobility measurements. A missing control signalling transmission (such as DRS, CRS or other reference symbols) can be concluded by the receiving device to indicate that the eNB was unable to access the channel/medium, if the receiving device was previously configured with the control signalling (e.g. reference signal(s)) pattern/timing indicating that there should have been transmission. DRS reference symbols are considered to be fairly well protected from interference, thus making it possible to measure the cell even in the presence of heavy interference, and also when the cell is fairly weak. Thus the DRS are considered suitable for use by the receiving device in determining if the eNB has access to a channel. A receiving device may also infer that the eNB was able to access the channel by observing a transmission addressed to it, or other transmissions that are identifiable to be from the particular eNB. It is noted that these are only some examples and other ways of providing the determination are also possible.

The eNB can attempt to get access to the channel whenever there is something to transmit to a device. The eNB can also periodically attempt to access the channel at times configured and known by the intended receiving device to send the reference symbols to facilitate measurements and DRX operation. Such configuration/periodicity can be taken into account in the DRX pattern e.g. by aligning it appropriately. The method for the receiving device to detect whether the eNB was able to access the channel or not may be based on assuming that the eNB will transmit reference symbols at configured timing if the eNB gets access to the channel.

For the reasons of simplicity the following example uses LTE DRX and on-duration and inactivity timers to illustrate the principle of flexible DRX timers due to channel access restrictions on eNB side. In the example the UE is configured with DRX for a LTE-U cell. In this example the cell configuration is independent from the DRX configuration of a possible co-existing cell in one or more licensed bands.

The DRX active time can be extended when the eNB is not able to use the channel. This is provided so that both the eNB and receiving device (e.g. an UE) have the same understanding of the DRX state. For the purposes of the example it is assumed that an eNB transmits the DRS (or eDRS) at known time instants configured also to the UE whenever possible, i.e. whenever the eNB gets access to the channel after LBT/CCA. Reference signal transmission can be aligned at least partially with the preconfigured period such as the DRX on-duration. That is, e.g. DRX of an UE can be configured so that it at least partly overlaps with the reference signal timing, e.g. DRS or DMTC occasion or window. The network, e.g. base station, may configure the reference signal transmission timing/pattern/window to the UE.

A DRX pattern can thus be configured so that there is a DRS transmission during the DRX on-duration. If the DRS is configured to be transmitted during the DRX on-duration, and if the UE does not detect a DRS transmission, the UE extends the DRX on-duration/active time with a predetermined amount of time. In other words, the UE assumes that the eNB did not transmit the DRS because the transmission was blocked. If the UE attempting to measure DRS from the eNB detects there was DTX (i.e. no DRS transmitted), it extends DRX active time.

The network can configure the UE with a specific DRX configuration where the on-duration, and possibly other parameters such as inactivity timer, has a given fixed or a variable length. The configuration can include the timers. Then network can configure whether the timers are fixed (non-extendable) or flexible (extendable). If extendable the configuration can also include an extension timer and may also include any other relevant parameter, for example a maximum extension time which the UE extends the given extendable timers. The configuration can include minimum length and/or maximum length of the timer/period. Alternatively these rules can be fixed by the specification and applied in the stand-alone LTE-U system.

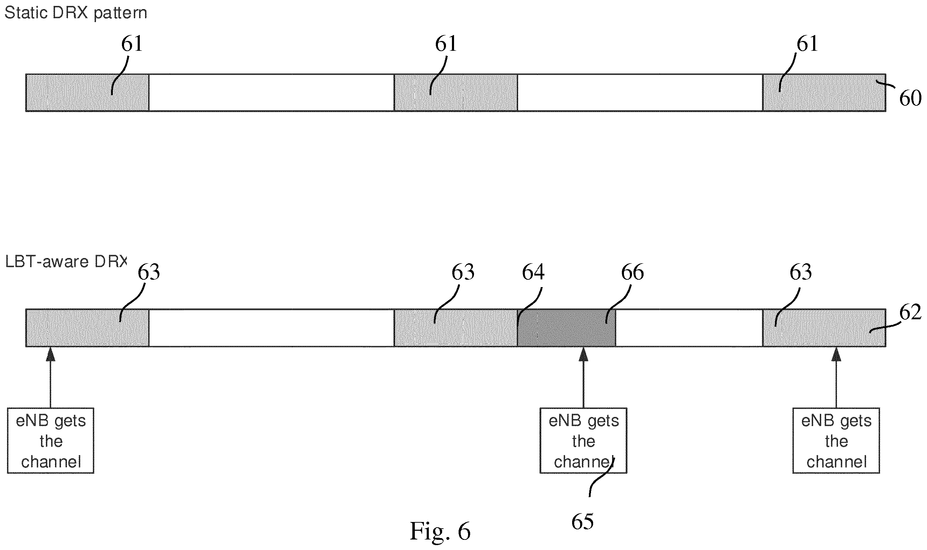

In Figure 6 certain principles of extending the on-duration (or active time) timer based on CCA/LBT are illustrated. In this basic illustration the on-duration is extended if the eNB does not, e.g. cannot access the channel during the on-duration period of the UE. The extension may be realized by re-starting the on-duration timer at the time when it would expire. At this point of time the UE determines that the eNB has managed to access the channel and can thus restart its timer accordingly. The UE active time (the time the UE is monitoring/listening downlink control channel) may also be extended with a configured amount of time. The configured time may be may be same or a separately defined time. It is also possible to provide a new timer for this purpose.

In the example of Figure 6 illustrating of LBT aware DRX operation two DRX patterns are shown. The upper pattern 60 is for static DRX with periodic fixed on-durations 61 showing how the legacy DRX procedure of LTE would work. The lower pattern 62 is configured for operation in accordance with the herein described principles. The flexible DRX pattern 62 has fixed or preconfigured on-duration periods 63. The UE can follow the preconfigured DRX periods as usual. However, if the eNB does not get the channel at 63, and cannot thus signal anything to the UE during the on-duration, the on-duration is extended as illustrated by block 64 for a given time e.g. until a channel becomes available for the eNB and the eNB gets the channel, see 65. The extension can also have a maximum length, this being illustrated in Figure 6 by end 66 of the block 64.

In some embodiments, the maximum length is applicable only if the eNB does not get the channel even during the extended on-duration.

There may thus be some additional time after the expiry of the ordinary on-durations where the UE monitors for a predefined duration, e.g. a few more subframes or full TxOp after the UE has first determined that eNB is using the channel, so in this case the active time is extended based on broadcast information, for example reference symbol transmission. If the UE is not scheduled but nevertheless determines that the eNB has access to the channel based on observing the reference signal transmission, the UE may monitor the control channel for an additional period afterwards.

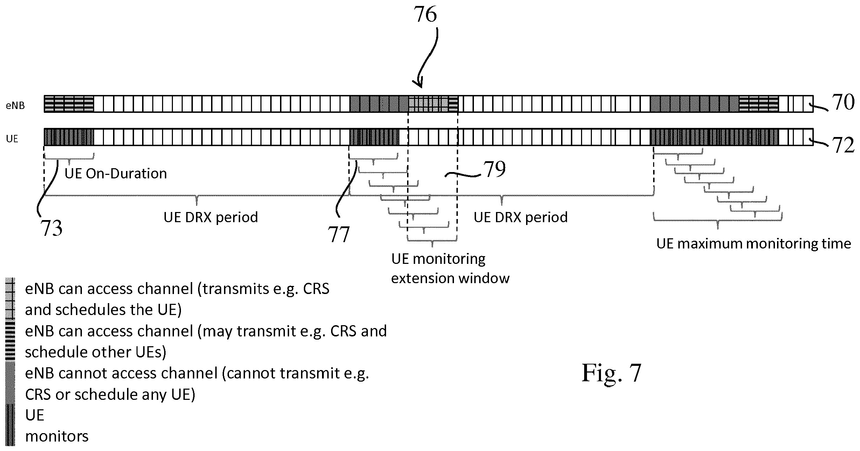

Alternatively the timer(s) is (are) extended in accordance with a sliding window principle and applied from the point when the eNB manages to get access to the channel. Only if/when the monitoring time reaches the configured maximum monitoring time without UE being scheduled (either because channel access was never successful or because there was nothing to schedule) the UE can stop monitoring. In Figure 7 example the sliding window monitoring principle is shown with a maximum monitoring time.

Figure 7 illustrates eNB DRX pattern 70 and UE DRX pattern 72. Certain further principles of UE monitoring rules are applied in order to take the channel access uncertainty of use of unlicensed band into account. In first preconfigured UE on-duration period 73 the eNB manages to access the channel and therefore can transmit at this duration. In the second preconfigured on-duration 77 the eNB is not able to access the channel initially. The UE can extend the monitoring time in a sliding window manner, this possibility being illustrated by the extension windows 79.

The eNB eventually manages to access the channel at 76 and the UE is scheduled (additional periods not illustrated here). At the first occurrence of the eNB transmission the on-duration timer starts. In the 3rd occurrence of on-duration the eNB eventually manages to access the channel but does not schedule the UE and the UE monitoring time reaches the maximum monitoring time.

In one alternative, the on-duration or other DRX related activity period such as the duration of inactivity timer is extended by a fixed amount of time if the eNB is not able to get access to the channel during the original on-duration. This is observed by the UE based on receiving eNB-specific transmission such as a reference symbol pattern.

In one example the UE can extend the DRX active time (e.g. by extending the on-duration) if during the on-duration the UE does not receive control channel indicating a new scheduling for transmitting/receiving data and the UE does not detect reference signal transmission at a configured timing during the on-duration. The detection of reference signal transmission may be based on a configured detection threshold.

The herein disclosed mechanism may provide certain advantages. Flexible operation of DRX that uses long on-duration or inactivity timer only when needed, that is only when eNB was not able to access the channel due to LBT, can be provided. Reasonable connected mode UE power saving for stand-alone LTE-U may be provided. Because of this UE can be kept in connected mode for longer periods of time when needed. This may result better performance in terms of latency as there is no need to jump back and forth between idle and connected modes. The usefulness of DRX can be improved for stand-alone LTE-U which otherwise might compromise the perceived user experience, e.g. due to short battery life and/or low performance.

The required data processing apparatus and functions may be provided by means of one or more data processors. The described functions may be provided by separate processors or by an integrated processor. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples. The data processing may be distributed across several data processing modules. A data processor may be provided by means of, for example, at least one chip. Appropriate memory capacity can be provided in the relevant devices. The memory or memories may be of any type suitable to the local technical environment and may be implemented using any suitable data storage technology, such as semiconductor based memory devices, magnetic memory devices and systems, optical memory devices and systems, fixed memory and removable memory.

An appropriately adapted computer program code product or products may be used for implementing the embodiments, when loaded or otherwise provided on an appropriate data processing apparatus, for example for causing determinations when to extend any of the periods, control operation of the timers and communication of information between the various devices. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is noted that whilst certain embodiments have been described above in relation to certain architectures using standalone unlicensed communication, this disclosure is not limited by this. For example, similar principles can be applied to other systems such as those where LAA (Licensed Assisted Access) to unlicensed radio spectrum is used. Such access can coexist with other technologies and fulfil regulatory requirements. For example, LAA unlicensed spectrum can be utilized to improve LTE downlink (DL) throughput is systems where user equipment (UE) specific primary cells (PCell) and secondary cells (SCells) are provided. One or more LAA DL secondary cells (SCells) may be configured to a user equipment (UE) as a part of DL carrier aggregation (CA) configuration while the primary cell (PCell) needs to be on the licensed spectrum. The principles can be applied also to other systems where sending of control information may be delayed or even blocked. Also, the above principles can also be used in networks where relay nodes are employed for relaying transmissions. Therefore, although certain embodiments were described above by way of example with reference to certain exemplifying architectures for wireless networks, technologies and standards, embodiments may be applied to any other suitable forms of communication systems than those illustrated and described herein.

## Claims

1. A method for communicating control information in unlicensed radio spectrum based on a discontinuous reception pattern where a preconfigured period is provided for signalling control information in a communication system (10) from a base station (12) to a communication device (20), the method comprising
starting at the communication device (20) in the preconfigured period monitoring of a transmission channel for receiving the control information;
determining (56) at the communication device (20) that the base station (12) is not accessing the transmission channel for the signalling of the control information during at least a part of the preconfigured period; and
extending (57) at the communication device (20) the preconfigured period by extending the monitoring of the transmission channel in response to the determining;
wherein access of the base station (12) to the transmission channel for the signalling of the control information is based in the communication system (10) on the outcome of a listen before talk protocol and/or a clear channel assessment protocol; and
wherein the determining (56) at the communication device (20) comprises determining that the communication device (20) has not been scheduled by the base station (12) and/or the communication device (20) is not receiving a reference signal.

2. A method according to claim 1, wherein the preconfigured period has a preconfigured minimum length, the method comprising using the preconfigured minimum length period for the signalling of the control information when the base station (12) has gained access to the channel during the preconfigured period, and otherwise extending the preconfigured period until the base station (12) has been able to access the transmission channel for the signalling or a maximum length of the extended period is reached.

3. A method according to any preceding claim, wherein the preconfigured period comprises an on-duration period of a discontinuous reception, DRX, pattern.

4. A method according to any preceding claim, comprising extending the expiry of at least one of DRX on-duration timer and DRX inactivity period timer from the expiry according to a DRX pattern.

5. A method according to any preceding claim, wherein the extending comprises at least one of restarting a timer for the preconfigured period, reconfiguring a timer for the preconfigured period, starting another timer, and starting a DRX on-duration timer only when the base station (12) is able to access a channel for the signalling of the control information.

6. A method according to any preceding claim, comprising alignment of reference signal transmission at least partially with the preconfigured period.

7. A method according to any preceding claim, wherein the determining at the communication device (20) comprises determining, by the communication device (20), the ability of the base station (12) to access the transmission channel for the signalling of the control information based on observing by the communication device (20) other transmissions by the base station (12).

8. A method according to any preceding claim, comprising applying a sliding window mechanism for extending the preconfigured period.

9. A communication device (20) for communicating control information in unlicensed radio spectrum based on a discontinuous reception pattern where a preconfigured period is provided for signalling control information in a communication system (10) from a base station (12) to the communication device (20), the communication device (20) comprising at least one processor (23), and at least one memory (24) including computer program code, wherein the at least one memory (24) and the computer program code are configured, with the at least one processor (23), to
start at the communication device (20) in the preconfigured period monitoring of a transmission channel for receiving the control information;
determine at the communication device (20) that the base station (12) is not accessing the transmission channel for the signalling of the control information during at least a part of the preconfigured period; and
extend at the communication device (20) the preconfigured period by extending the monitoring of the transmission channel in response to the determining;
wherein access of the base station (12) to the transmission channel for the signalling of the control information is based in the communication system (10) on the outcome of a listen before talk protocol and/or a clear channel assessment protocol; and
wherein the determining at the communication device comprises determining that the communication device (20) has not been scheduled by the base station (12) and/or the communication device (20) is not receiving a reference signal.

10. A communication device (20) according to claim 9, wherein the preconfigured period has a preconfigured minimum length, and the at least one memory (24) and the computer program code further configured, with the at least one processor (23), to use the preconfigured minimum length period for the signalling of the control information when the base station (12) has gained access to the channel during the preconfigured period, and otherwise to extend the preconfigured period until the base station (12) has been able to access the transmission channel for the signalling or a maximum length of the extended period is reached.

11. A communication device (20) according to any one of claims 9 to 10, wherein the preconfigured period comprises an on-duration period of a discontinuous reception, DRX, pattern.

12. A communication device (20) according to any one of claims 9 to 11, and the at least one memory (24) and the computer program code further configured, with the at least one processor (23), to extend the expiry of at least one of DRX on-duration timer and DRX inactivity period timer from the expiry according to a DRX pattern.

13. A communication device (20) according to any one of claims 9 to 12, wherein the extending by the communication device (20) comprises at least one of restarting a timer for the preconfigured period, reconfiguring a timer for the preconfigured period, starting another timer, and starting a DRX on-duration timer only when the base station (12) is able to access a channel for the signalling of the control information.

14. A communication device (20) according to any of claims 9 to 13, and the at least one memory (24) and the computer program code further configured, with the at least one processor (23), to align reference signal transmission at least partially with the preconfigured period.

15. A communication device (20) according to any of claims 9 to 14, wherein the determining at the communication device (20) comprises determining, by the communication device (20), the ability of the base station (12) to access the transmission channel for the signalling of the control information based on observing by the communication device (20) other transmissions by the base station (12).

16. A communication device (20) according to any of claims 9 to 15, and the at least one memory (24) and the computer program code further configured, with the at least one processor (23), to apply a sliding window mechanism for extending the preconfigured period.

17. A communication system (10) enabling communications in an unlicensed radio spectrum comprising a communication device (20) according to any one of claims 9 to 16 and a base station (12).

18. A computer program comprising program code means adapted to perform the steps of any of claims 1 to 8 when the program is run on a data processing apparatus.

## Patentansprüche

1. Verfahren zum Kommunizieren von Steuerinformationen in einem nicht lizenzierten Funkspektrum auf Basis eines diskontinuierlichen Empfangsmusters, wo eine Basisstation (12) einer Kommunikationsvorrichtung (20) eine vorausgelegte Periode zum Signalisieren von Steuerinformationen in einem Kommunikationssystem (10) bereitstellt, wobei das Verfahren Folgendes umfasst
Starten des Überwachens eines Übertragungskanals zum Empfangen der Steuerinformationen in der vorausgelegten Periode an der Kommunikationsvorrichtung (20);
Bestimmen (56), dass die Basisstation (12) für die Signalisierung der Steuerinformationen während mindestens eines Teils der vorausgelegten Periode nicht auf den Übertragungskanal zugreift, an der Kommunikationsvorrichtung (20); und
Verlängern (57) der vorausgelegten Periode an der Kommunikationsvorrichtung (20) durch Verlängern des Überwachens des Übertragungskanals in Reaktion auf das Bestimmen;
wobei der Zugriff der Basisstation (12) auf den Übertragungskanal zum Signalisieren der Steuerinformationen im Kommunikationssystem (10) auf dem Ergebnis eines Listen-before-Talk-Protokolls und/oder eines Freikanalbeurteilungsprotokolls basiert; und
wobei das Bestimmen (56) an der Kommunikationsvorrichtung (20) das Bestimmen, dass die Kommunikationsvorrichtung (20) von der Basisstation (12) nicht geplant wurde und/oder die Kommunikationsvorrichtung (20) kein Referenzsignal empfängt, umfasst.

2. Verfahren nach Anspruch 1, wobei die vorausgelegte Periode eine vorausgelegte Mindestlänge aufweist, wobei das Verfahren das Verwenden der vorausgelegten Periode der Mindestlänge zum Signalisieren der Steuerinformationen, wenn die Basisstation (12) während der vorausgelegten Periode Zugriff auf den Kanal erlangt, und andernfalls das Verlängern der vorausgelegten Periode, bis die Basisstation (12) zum Signalisieren auf den Übertragungskanal zugreifen kann oder eine maximale Länge der verlängerten Periode erreicht ist, umfasst.

3. Verfahren nach einem der vorhergehenden Ansprüche, wobei die vorausgelegte Periode eine Ein-Dauer-Periode eines diskontinuierlichen Empfangs(DRX)-Musters umfasst.

4. Verfahren nach einem der vorhergehenden Ansprüche, das das Verlängern des Ablaufs von mindestens einem von einem DRX-Ein-Dauer-Timer und einem DRX- Inaktivitätsperiodentimer ab dem Ablauf gemäß einem DRX-Muster umfasst.

5. Verfahren nach einem der vorhergehenden Ansprüche, wobei das Verlängern mindestens eines von einem Neustarten eines Timers für die vorausgelegte Periode, einem Neuauslegen eines Timers für die vorausgelegte Periode, einem Starten eines anderen Timers und einem Starten eines DRX-Ein-Dauer-Timers, nur wenn die Basisstation (12) zum Signalisieren der Steuerinformationen auf einen Kanal zugreifen kann, umfasst.

6. Verfahren nach einem der vorhergehenden Ansprüche, das das mindestens teilweise Angleichen der Referenzsignalübertragung an die vorausgelegte Periode umfasst.

7. Verfahren nach einem der vorhergehenden Ansprüche, wobei das Bestimmen an der Kommunikationsvorrichtung (20) das Bestimmen der Fähigkeit der Basisstation (12) zum Zugreifen auf den Übertragungskanal zum Signalisieren der Steuerinformationen durch die Kommunikationsvorrichtung (20) auf Basis des Beobachtens von anderen Übertragungen von der Basisstation (12) durch die Kommunikationsvorrichtung (20) umfasst.

8. Verfahren nach einem der vorhergehenden Ansprüche, das das Anwenden eines Gleitfenstermechanismus zum Verlängern der vorausgelegten Periode umfasst.

9. Kommunikationsvorrichtung (20) zum Kommunizieren von Steuerinformationen in einem nicht lizenzierten Funkspektrum auf Basis eines diskontinuierlichen Empfangsmusters, wo eine Basisstation (12) der Kommunikationsvorrichtung (20) eine vorausgelegte Periode zum Signalisieren von Steuerinformationen in einem Kommunikationssystem (10) bereitstellt, wobei die Kommunikationsvorrichtung (20) mindestens einen Prozessor (23) und mindestens einen Speicher (24), der Computerprogrammcode beinhaltet, umfasst, wobei der mindestens eine Speicher (24) und der Computerprogrammcode mit dem mindestens einen Prozessor (23) zu Folgendem ausgelegt sind
Starten des Überwachens eines Übertragungskanals zum Empfangen der Steuerinformationen in der vorausgelegten Periode an der Kommunikationsvorrichtung (20);
Bestimmen, dass die Basisstation (12) für die Signalisierung der Steuerinformationen während mindestens eines Teils der vorausgelegten Periode nicht auf den Übertragungskanal zugreift, an der Kommunikationsvorrichtung (20); und
Verlängern der vorausgelegten Periode an der Kommunikationsvorrichtung (20) durch Verlängern des Überwachens des Übertragungskanals in Reaktion auf das Bestimmen;
wobei der Zugriff der Basisstation (12) auf den Übertragungskanal zum Signalisieren der Steuerinformationen im Kommunikationssystem (10) auf dem Ergebnis eines Listen-before-Talk-Protokolls und/oder eines Freikanalbeurteilungsprotokolls basiert; und
wobei das Bestimmen an der Kommunikationsvorrichtung das Bestimmen, dass die Kommunikationsvorrichtung (20) von der Basisstation (12) nicht geplant wurde und/oder die Kommunikationsvorrichtung (20) kein Referenzsignal empfängt, umfasst.

10. Kommunikationsvorrichtung (20) nach Anspruch 9, wobei die vorausgelegte Periode eine vorausgelegte Mindestlänge aufweist und der mindestens eine Speicher (24) und der Computerprogrammcode mit dem mindestens einen Prozessor (23) ferner dazu ausgelegt sind, die vorausgelegte Periode der Mindestlänge zum Signalisieren der Steuerinformationen zu verwenden, wenn die Basisstation (12) während der vorausgelegten Periode Zugriff auf den Kanal erlangt, und andernfalls die vorausgelegte Periode zu verlängern, bis die Basisstation (12) zum Signalisieren auf den Übertragungskanal zugreifen kann oder eine maximale Länge der verlängerten Periode erreicht ist.

11. Kommunikationsvorrichtung (20) nach einem der Ansprüche 9 bis 10, wobei die vorausgelegte Periode eine Ein-Dauer-Periode eines diskontinuierlichen Empfangs(DRX)-Musters umfasst.

12. Kommunikationsvorrichtung (20) nach einem der Ansprüche 9 bis 11, wobei der mindestens eine Speicher (24) und der Computerprogrammcode mit dem mindestens einen Prozessor (23) ferner dazu ausgelegt sind, den Ablauf von mindestens einem von einem DRX-Ein-Dauer-Timer und einem DRX-Inaktivitätsperiodentimer ab dem Ablauf gemäß einem DRX-Muster zu verlängern.

13. Kommunikationsvorrichtung (20) nach einem der Ansprüche 9 bis 12, wobei das Verlängern durch die Kommunikationsvorrichtung (20) mindestens eines von einem Neustarten eines Timers für die vorausgelegte Periode, einem Neuauslegen eines Timers für die vorausgelegte Periode, einem Starten eines anderen Timers und einem Starten eines DRX-Ein-Dauer-Timers, nur wenn die Basisstation (12) zum Signalisieren der Steuerinformationen auf einen Kanal zugreifen kann, umfasst.

14. Kommunikationsvorrichtung (20) nach einem der Ansprüche 9 bis 13, wobei der mindestens eine Speicher (24) und der Computerprogrammcode mit dem mindestens einen Prozessor (23) ferner dazu ausgelegt sind, eine Referenzsignalübertragung mindestens teilweise an die vorausgelegte Periode anzugleichen.

15. Kommunikationsvorrichtung (20) nach einem der Ansprüche 9 bis 14, wobei das Bestimmen an der Kommunikationsvorrichtung (20) das Bestimmen der Fähigkeit der Basisstation (12) zum Zugreifen auf den Übertragungskanal zum Signalisieren der Steuerinformationen durch die Kommunikationsvorrichtung (20) auf Basis des Beobachtens von anderen Übertragungen von der Basisstation (12) durch die Kommunikationsvorrichtung (20) umfasst.

16. Kommunikationsvorrichtung (20) nach einem der Ansprüche 9 bis 15, wobei der mindestens eine Speicher (24) und der Computerprogrammcode mit dem mindestens einen Prozessor (23) ferner dazu ausgelegt sind, zum Verlängern der vorausgelegten Periode einen Gleitfenstermechanismus anzuwenden.

17. Kommunikationssystem (10), das die Kommunikation in einem nicht lizenzierten Funkspektrum ermöglicht und eine Kommunikationsvorrichtung (20) nach einem der Ansprüche 9 bis 16 und eine Basisstation (12) umfasst.

18. Computerprogramm, das Programmcodemittel umfasst, die angepasst sind, die Schritte von einem der Ansprüche 1 bis 8 durchzuführen, wenn das Programm auf einer Datenverarbeitungseinrichtung läuft.

## Revendications

1. Procédé de communication d'informations de commande dans un spectre radioélectrique sans licence sur la base d'un motif de réception discontinue où une période préconfigurée est prévue pour signaler des informations de commande dans un système de communication (10), d'une station de base (12) à un dispositif de communication (20), le procédé comprenant
le démarrage, au niveau du dispositif de communication (20) dans la période préconfigurée, de la surveillance d'un canal de transmission pour recevoir les informations de commande ;
la détermination (56), au niveau du dispositif de communication (20), du fait que la station de base (12) n'accède pas au canal de transmission pour signaler les informations de commande pendant au moins une partie de la période préconfigurée ; et
le prolongement (57), au niveau du dispositif de communication (20), de la période préconfigurée en prolongeant la surveillance du canal de transmission en réponse à la détermination ;
dans lequel l'accès de la station de base (12) au canal de transmission pour signaler les informations de commande est basé, dans le système de communication (10), sur le résultat d'un protocole d'écoute avant conversation et/ou d'un protocole d'évaluation de canal clair ; et
dans lequel la détermination (56) au niveau du dispositif de communication (20) comprend la détermination du fait que le dispositif de communication (20) n'a pas été planifié par la station de base (12) et/ou que le dispositif de communication (20) ne reçoit pas de signal de référence.

2. Procédé selon la revendication 1, dans lequel la période préconfigurée a une longueur minimale préconfigurée, le procédé comprenant l'utilisation de la période de longueur minimale préconfigurée pour signaler les informations de commande lorsque la station de base (12) a obtenu l'accès au canal pendant la période préconfigurée, et sinon pour prolonger la période préconfigurée jusqu'à ce que la station de base (12) ait pu accéder au canal de transmission pour la signalisation ou qu'une longueur maximale de la période prolongée soit atteinte.

3. Procédé selon l'une quelconque des revendications précédentes, dans lequel la période préconfigurée comprend une période de durée d'activation d'un motif de réception discontinue, DRX.

4. Procédé selon l'une quelconque des revendications précédentes, comprenant le prolongement de l'expiration d'au moins un parmi un temporisateur de durée d'activation DRX et un temporisateur de période d'inactivité DRX à partir de l'expiration selon un motif DRX.

5. Procédé selon l'une quelconque des revendications précédentes, dans lequel le prolongement comprend au moins un parmi le redémarrage d'un temporisateur pendant la période préconfigurée, la reconfiguration d'un temporisateur pendant la période préconfigurée, le démarrage d'un autre temporisateur, et le démarrage d'un temporisateur de durée d'activation DRX uniquement lorsque la station de base (12) est en mesure d'accéder à un canal pour signaler les informations de commande.

6. Procédé selon l'une quelconque des revendications précédentes, comprenant l'alignement d'une transmission de signal de référence au moins partiellement avec la période préconfigurée.

7. Procédé selon l'une quelconque des revendications précédentes, dans lequel la détermination au niveau du dispositif de communication (20) comprend la détermination, par le dispositif de communication (20), de la capacité de la station de base (12) à accéder au canal de transmission pour signaler les informations de commande sur la base de l'observation par le dispositif de communication (20) d'autres transmissions par la station de base (12).

8. Procédé selon l'une quelconque des revendications précédentes, comprenant l'application d'un mécanisme de fenêtre coulissante pour prolonger la période préconfigurée.

9. Dispositif de communication (20) pour communiquer des informations de commande dans un spectre radioélectrique sans licence sur la base d'un motif de réception discontinue où une période préconfigurée est prévue pour signaler des informations de commande dans un système de communication (10), d'une station de base (12) au dispositif de communication (20), le dispositif de communication (20) comprenant au moins un processeur (23) et au moins une mémoire (24) comportant un code de programme informatique, dans lequel l'au moins une mémoire (24) et le code de programme informatique sont configurés, avec l'au moins un processeur (23), pour
démarrer, au niveau du dispositif de communication (20) dans la période préconfigurée, la surveillance d'un canal de transmission pour recevoir les informations de commande ;
déterminer, au niveau du dispositif de communication (20) que la station de base (12), n'accède pas au canal de transmission pour signaler les informations de commande pendant au moins une partie de la période préconfigurée ; et
prolonger, au niveau du dispositif de communication (20), la période préconfigurée en prolongeant la surveillance du canal de transmission en réponse à la détermination ;
dans lequel l'accès de la station de base (12) au canal de transmission pour signaler les informations de commande est basé, dans le système de communication (10), sur le résultat d'un protocole d'écoute avant conversation et/ou d'un protocole d'évaluation de canal clair ; et
dans lequel la détermination au niveau du dispositif de communication comprend la détermination du fait que le dispositif de communication (20) n'a pas été planifié par la station de base (12) et/ou que le dispositif de communication (20) ne reçoit pas de signal de référence.

10. Dispositif de communication (20) selon la revendication 9, dans lequel la période préconfigurée a une longueur minimale préconfigurée, et l'au moins une mémoire (24) et le code de programme informatique sont en outre configurés, avec l'au moins un processeur (23), pour utiliser la période de longueur minimale préconfigurée pour signaler les informations de commande lorsque la station de base (12) a obtenu l'accès au canal pendant la période préconfigurée, et sinon pour prolonger la période préconfigurée jusqu'à ce que la station de base (12) ait pu accéder au canal de transmission pour la signalisation ou qu'une longueur maximale de la période prolongée soit atteinte.

11. Dispositif de communication (20) selon l'une quelconque des revendications 9 et 10, dans lequel la période préconfigurée comprend une période de durée d'activation d'un motif de réception discontinue, DRX.

12. Dispositif de communication (20) selon l'une quelconque des revendications 9 à 11, où l'au moins une mémoire (24) et le code de programme informatique sont en outre configurés, avec l'au moins un processeur (23), pour prolonger l'expiration d'au moins un parmi un temporisateur de durée d'activation DRX et un temporisateur de période d'inactivité DRX à partir de l'expiration selon un motif DRX.

13. Dispositif de communication (20) selon l'une quelconque des revendications 9 à 12, dans lequel le prolongement par le dispositif de communication (20) comprend au moins un parmi le redémarrage d'un temporisateur pendant la période préconfigurée, la reconfiguration d'un temporisateur pendant la période préconfigurée, le démarrage d'un autre temporisateur, et le démarrage d'un temporisateur de durée d'activation DRX uniquement lorsque la station de base (12) est en mesure d'accéder à un canal pour signaler les informations de commande.

14. Dispositif de communication (20) selon l'une quelconque des revendications 9 à 13, où l'au moins une mémoire (24) et le code de programme informatique sont en outre configurés, avec l'au moins un processeur (23), pour aligner la transmission de signal de référence au moins partiellement avec la période préconfigurée.

15. Dispositif de communication (20) selon l'une quelconque des revendications 9 à 14, dans lequel la détermination au niveau du dispositif de communication (20) comprend la détermination, par le dispositif de communication (20), de la capacité de la station de base (12) à accéder au canal de transmission pour signaler les informations de commande sur la base de l'observation par le dispositif de communication (20) d'autres transmissions par la station de base (12).

16. Dispositif de communication (20) selon l'une quelconque des revendications 9 à 15, où l'au moins une mémoire (24) et le code de programme informatique sont en outre configurés, avec l'au moins un processeur (23), pour appliquer un mécanisme de fenêtre coulissante pour prolonger la période préconfigurée.

17. Système de communication (10) permettant des communications dans un spectre radioélectrique sans licence comprenant un dispositif de communication (20) selon l'une quelconque des revendications 9 à 16 et une station de base (12).

18. Programme informatique comprenant un moyen de code de programme adapté pour réaliser les étapes de l'une quelconque des revendications 1 à 8 lorsque le programme est exécuté sur un appareil de traitement des données.
